Europäisches Patentamt

(19) European Patent Office (11) Publication number: **0 238 388**
**B1**

Office européen des brevets

(12) EUROPEAN PATENT SPECIFICATION

(45) Date of publication of the patent specification: (51) Int. Cl.⁴: **B60T 8/42**
**07.02.90**

(21) Application number: **87400483.1**

(22) Date of filing: **05.03.87**

(54) **Bi-fluidic brake actuator for a vehicle braking circuit.**

(30) Priority: **18.03.86 IT 1978386**

(43) Date of publication of application:
**23.09.87 Bulletin 87/39**

(45) Publication of the grant of the patent:
**07.02.90 Bulletin 90/6**

(84) Designated Contracting States:
**DE FR GB SE**

(56) References cited:
**DE-A- 2 010 975**
**DE-A- 2 037 435**
**US-A- 3 754 796**
**US-A- 3 830 550**

(73) Proprietor: **BENDIX ITALIA S.p.A., Via Cavalli 53 A
Casella Postale 66, I-26013 Crema(IT)**

(72) Inventor: **Cadeddu, Leonardo, Via Stazione 23,
I-26013 Crema (CR)(IT)**

(74) Representative: **Timoney, Ian Charles Craig et al,
BENDIX FRANCE Division Technique Service Brevets
Bendix Europe 126, rue de Stalingrad,
F-93700 Drancy(FR)**

ACTORUM AG

## Description

The present invention relates to a bi-fluidic brake actuator for a vehicle braking circuit and, more particularly, to a brake circuit including a hydro-pneumatic actuator for use with an anti-skid braking system.

In the majority of anti-skid braking systems electro-hydraulic valves are used to control the hydraulic pressure applied to the vehicle wheels during braking. The valves are linked to a sensing circuit which determines the speed of the wheel which is being braked. If the wheel locks a signal is sent to the electro-hydraulic valve causing it to decrease the hydraulic pressure applied to the wheel brake. The brake circuit also generally includes a hydraulic booster actuated by the brake pedal and connected to a source of high pressure fluid. When the wheel being braked starts to turn again the sensing circuit causes the electro-hydraulic valve to send fluid under pressure from the booster to the brakes and thus recommence braking.

A braking system of the type described above ist, however, complex and costly due to the number of specialised components which it requires. It is therefore an object of the invention to provide a bi-fluidic brake actuator for a vehicle braking circuit which is adapted for use in an anti-skid mode, which is simple and which uses readily available components of conventional design.

A bi-fluidic brake actuator is disclosed in US-A 3 830 550. However, this actuator which operates in an on/off mode uses a pneumatic servomotor having two pistons and three chambers and is a very complex device.

DE-A 2 037 435 teaches another actuator also of complex design.

In order to avoid these disadvantages, the invention provides a bi-fluidic brake actuator for a vehicle brake circuit comprising a closed shell divided into first and second booster chambers by a flexible diaphragm, one chamber being intended to be connected, in use, to a low pressure fluid, the two chambers being interconnectable by way of a passage which may be selectively closed by a first valve means, the other chamber being selectively connectable by a second valve means to a source of high pressure fluid, the flexible diaphragm being connected to a spool valve controlling the brake fluid circuit and having an input connected via an input line to a pressure generator and an output connected via an output line to at least one brake, the actuator further comprises an electromagnetic actuator adapted to operate the valve means. According to the invention the spool valve comprises a spool member displaceable in a bore so that, at its rest position, said input is connected to said output, and out of said rest position, said input is closed, the spool member having sufficient available travel in said bore to provide a disposable volume communicating with the output line sufficient to lower the pressure in same, the movement of said spool member being controlled through the flexible diaphragm in proportion to the electrical signal applied to the electromagnetic actuator.

Preferingly, the first valve means comprises a piston displaceable in response to the electrical signal applied to the electromagnetic actuator for isolating the chambers one from the other, further movement of the piston causing the second valve means to connect the first chamber to the source of high pressure fluid.

According to another aspect of the invention, there is provided an anti-skid braking system for a vehicle comprising the above discussed be-fluidic actuator, the system further comprising sensing means for determining the speed of rotation of the wheel, electronic processor and actuator means generating the electrical signal applied to the electromagnetic acutator in response to the locking of the vehicle wheel.

One embodiment of the present invention will now be described by way of example with reference to the accompanying drawings, in which:

– Figure 1 is a schematic layout of a vehicle brake system including a bi-fluidic brake actuator according to the present invention; and
– Figure 2 is a longitudinal sectional view of the pneumatic brake actuator of Figure 1.

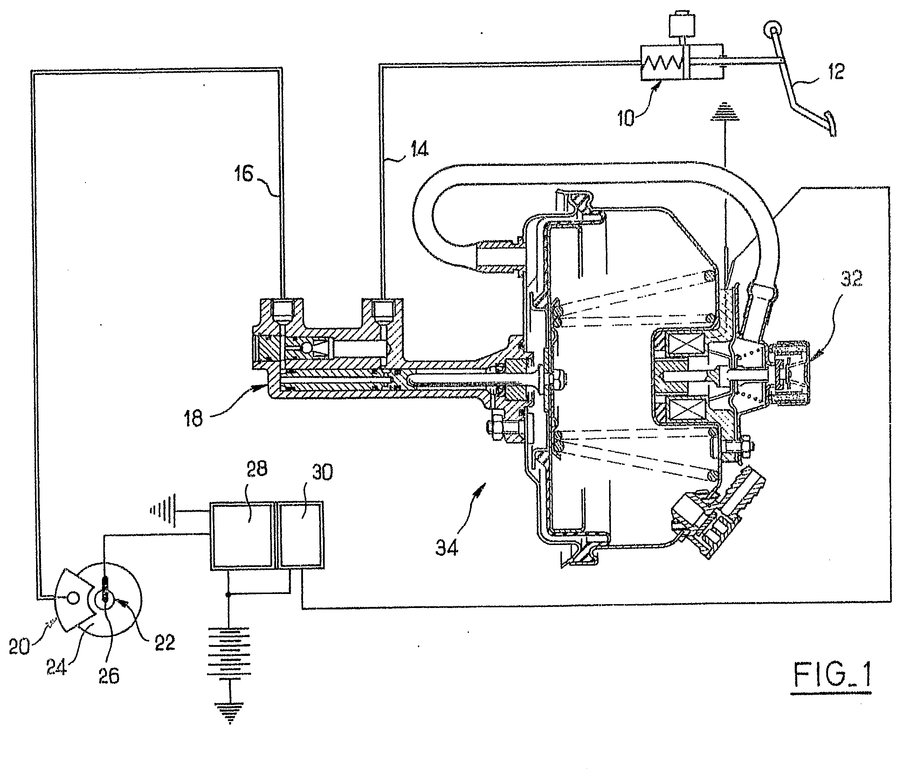

As shown in Figure 1, the vehicle brake system comprises a master cylinder 10 adapted to be actuated by a vehicle brake pedal 12. The master cylinder, in the example shown, is a conventional, hydrostatic master cylinder but it is envisaged that a hydrodynamic or assisted brake booster may be used. When the master cylinder is operated fluid under pressure passes along brake lines 14 and 16 by way of spool valve assembly 18 (which will be described below in greater detail) to disc brake 20. The disc brake 20 comprises a toothed, or phonic wheel 22 mounted on the brake disc 24 adjacent to which is mounted an inductive sensor 26 to determine the speed of rotation of the vehicle wheel (not shown). Signals from the inductive sensor 26 are analysed by an electronic processor 28 which is connected to an electric actuator 30. If the inductive sensor 26 determines that its associated wheel has locked during a braking operation, the electronic processor 28 causes the electric actuator 30 to send a control signal to an electromagnetic valve 32 which is mounted on a bi-fluidic brake actuator 34.

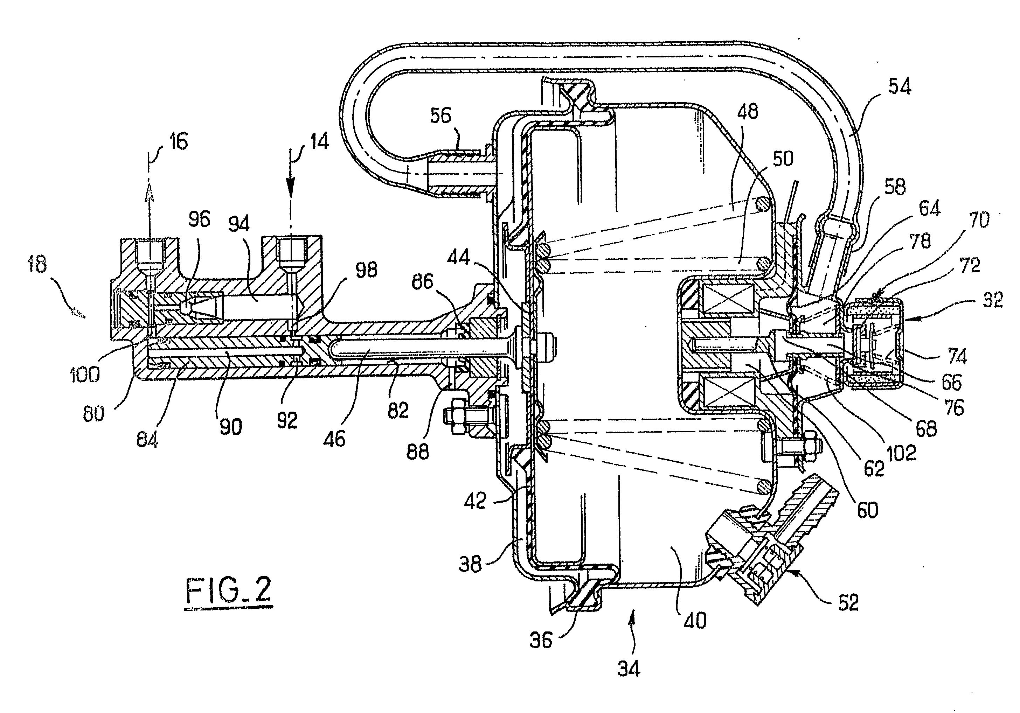

Turning now to Figure 2 the bi-fluidic actuator which, in the example shown, is a hydro-pneumatic brake actuator 34 comprises a vacuum shell 36 which is divided into first and second actuator chambers 38 and 40 by a flexible diaphragm 42. The flexible diaphragm 42 supports a disc 44 to which is secured one end of a push rod 46. The flexible diaphragm 42 and disc 44 are urged to the left, when viewing the drawings, by two helical springs 48, 50 mounted in the actuator shell 36. The second actuator chamber 40 includes a vacuum check valve 52 intended to be connected to a vacuum source such as the engine inlet manifold (not shown). The first and second actuator chambers 38 and 40 are interconnected by a connecting pipe 54, one end 56 of which opens into the first chamber 38 and the other end 58 is connected to the second chamber 40 by way of the electromagnetic valve 32.

The electromagnetic valve 32 comprises a solenoid 60 which is actuatable in response to signals from the electric actuator 30 to displace piston 62 to the right, when viewing the drawings. Piston 62 is slideably and sealingly received in a diaphragm 64 and comprises a longitudinal bore 66 which opens into the interior of the second chamber 40 by way of a lateral opening 68 and a passage through the solenoid 60. In the illustrated rest position the two actuator chambers 38 and 40 are interconnected by way of pipe 54, the interior of electromagnetic valve 32 and the longitudinal bore 66 through piston 62. The electromagnetic valve 32 comprises a pneumatic valve 70 adapted to be operated by the displacement of piston 62. The pneumatic valve 70 comprises a disc shaped valve member 72 which is urged to the left by a spring 74 against an annular valve seat 76. The interior of the electromagnetic valve 32 forms a valve chamber 78 which is isolated from the atmosphere by valve member 72 when it is in its rest position on valve seat 76. When the solenoid 60 of the electromagnetic valve 32 is energised the piston 62 moves to the right and its open end abuts valve member 72 and thus closes the passage between the first and second actuator chambers 38 and 40. Further movement of the piston 62 to the right lifts valve member 72 from its seat 76 and permits atmospheric air to pass through valve chamber 78 and pipe 54 to the first actuator chamber 38 while the second chamber 40 remains isolated.

The spool valve assembly 18 comprises a body 80 having a longitudinal bore 82 in which a spool member 24 is slideably and sealingly received and adapted to be displaced by push rod 46. The push rod 46 is received in the bore 82 and passes through an annular seal 86 which isolates the first chamber 38 from the interior of the bore 82. The interior of the bore 82 between the spool member 84 and the seal 86 is open to the atmosphere by way of passage 88. Spool member 84 comprises a longitudinal passage 90 which opens directly into bore 82 at its left hand end and, adjacent its right hand by way of lateral opening 92. The body 80 further comprises a second bore 94 in which is received a one-way check valve 96. Brake line 14 from master cylinder 10 is connected to the interior of second bore 94 and communicates with bore 82 by way of an opening 98. Brake line 16 is connected to the upstream side of check valve 96 and to the end of bore 82 by a passage 100

The hydro-pneumatic actuator as described above operates as follows. When the vehicle engine is started a vacuum is applied to the second chamber 40 by way of check valve 52 and is consequently applied to the first chamber 38 by way of pipe 54. The flexible diaphragm 42 is thus subject to equal pneumatic pressure and is urged into its illustrated rest position by the two springs 48 and 50. In the rest position the push rod 46 and spool member 84 are in their extreme leftward position and the hydraulic passage between brake lines 14 and 16 by way of longitudinal passage 90 is open. When the brakes of the vehicle are applied, in normal braking conditions, fluid under pressure passes from master cylinder 10 to the disc brake 20 by way of brake lines 14 and 16 and spool valve assembly 18. The spool member 84 is restrained from moving to the right under the effect of increasing hydraulic pressure in the bore 82 by springs 48 and 50.

In the event that the wheel locks during braking the anti-skid braking system comes into operation. The inductive sensor 26 picks up the locking of the wheel and the electronic processor 28 causes the electric actuator 30 to activate the solenoid 60 of electromagnetic valve 32. The actuation of solenoid 60 causes the piston 62 to move to the right into contact with valve member 72 thus isolating the first chamber 36 from the second chamber 40. Further movement of piston 62 causes valve member 72 to lift from its seat 76 and allow atmospheric air to pass through valve chamber 78 and pipe 54 into the first chamber 38. The resulting pressure differential across the flexible diaphragm 42 causes the push rod 46 to move to the right with the flexible diaphragm 42 allowing spool member 84 to move to the right under the effect of the hydraulic pressure in bore 82. The displacement of the spool member 84 moves lateral opening 92 out of communication with opening 98 and thus interrupts the hydraulic passage between brake lines 14 and 16. Furthermore the displacement of spool member 84 causes a decrease in the braking pressure in bore 82 applied to disc brake 20 which allows the wheel to begin to turn again. The spool member 84 has sufficient available travel in bore 82 to provide a disposable volume in the bore 82 for fluid from the brake 20 which is sufficient to lower the braking pressure to a minimum level at which the wheel is assured of rotating even in the worst possible road conditions. Movement of the piston 62 can be selectively limited by controlled actuation of the solenoid 60 so that it adopts a lap position in which passage 66 is closed by valve member 72 but in which valve member 72 is still closed on its seat 76. In this position the pressure differential across diaphragm 64 is equal to that across the flexible diaphragm 42. The reaction acting to the left on piston 62 is therefore in proportion to the force exerted by the flexible diaphragm 42 and to the force generated by the solenoid.

The lap position gives a greater flexibility of operation to the actuator, allowing it to function with greater precision than would be allowed by a simple on/off function. Minor variations in the signal sent to the solenoid allow the actuator pressure, and thus the braking pressure, to be selectively increased or decreased by fractionally opening or closing the valve assembly 32. Thus controlled braking pressure modulation is allowed by controlled actuation of the solenoid into and out of the lap position. Once the inductive sensor 26 has determined that the wheel has begun to turn the actuating signal to the solenoid is switched off causing the piston 62 to return to the left under the effect of spring 74 and spring 102 which acts against diaphragm 64. The return of piston 62 causes valve member 72 to close on its seat 76, interrupting the passage of air to the first chamber 38, and opens passage 66 which allows the vacuum in the second chamber 40 to be applied to first chamber 38. The flexible diaphragm 42 moves back to the left under the effect of springs 48 and 50 causing the spool member 84 to move and re-open the hydraulic passage between brake lines 14 and 16. Braking pressure is thus re-applied to the disc brake 20. If the wheel being braked locks again the anti-skid cycle described above is repeated. Displacement of the spool member 84 allows any selected braking pressure below the initial braking pressure to be adopted. In order to increase the braking pressure beyond the initial level the spool member 84 must first close to allow further fluid under higher pressure to pass to the brakes 20 from the master cylinder 10. If the brake pedal is released while the spool member 84 is in its displaced position hydraulic fluid in brake line 16 can return to brake line 14 through the check valve 96. Similarly, when the spool member 84 is in its displaced position the master cylinder is isolated from the brakes and thus an increase in pressure on the brake pedal 12 has no corresponding increase in braking pressure.

It is envisaged that the two springs 48 and 50 may be replaced by a single spring or by any other resilient means which would exert a force on the flexible diaphragm 42. The determining criterion is that the return force to the left on the flexible diaphragm 42 and hence on spool member 84 is calculated to be greater than the maximum possible braking pressure necessary to lock the wheels, which pressure tends to exert a rightward force on the spool member. Thus, in the event of failure of the actuator mechanism the spool member 84 cannot move to the right during braking and interrumpt the fluid flow to the brakes below a maximum possible braking pressure. Braking of the vehicle in the event of failure of the actuator is thus assured.

The push rod 46 and the spool member 84 may be formed as a single piece to thus allow for a reduction in the length of the spool valve assembly. Furthermore the illustrated annular seals on the spool member 84 may be omitted to simplify construction and reduce the sliding friction between spool member 84 and the bore 82. The fluid seepage past the spool member 84 in use would be minimal and would not have an undesiderable effect in operation.

It is furthermore envisaged that the device described could be modified for controlling a pneumatic braking circuit. This would necessitate an increase in the dimensions of spool valve 18 in order that movement of spool member 84 could produce the necessary change in braking pressure.

The actuator could also include a pressure responsive switch by means of which an indicator light could warn the vehicle driver of an decrease in the operating vacuum which would render the actuator unoperational.

While the actuator has been described with a vacuum operated mechanism for displacing the spool member 84 it is envisaged that the flexible diaphragm be displaced by high pressure air. In such a case, in the rest position, the first and second chambers 38 and 40 would be at atmospheric pressure. Alternatively differential hydraulic pressure could be used in the actuator to displace spool member 84.

Furthermore, as an alternative to selectively increasing the pressure in the first chamber 38 it is alternatively possible that the actuator be operated by selectively decreasing the pressure in the second chamber 40.

## Claims

1. A bi-fluidic brake actuator for a vehicle brake circuit comprising a closed shell (36) divided into first and second booster chambers (38, 40) by a flexible diaphragm (42), one chamber (40) being intended to be connected, in use, to a low pressure fluid, the two chambers (38, 40) being interconnectable by way of a passage (54) which may be selectively closed by a first valve means (62, 72), the other chamber (38) being selectively connectable by a second valve means (72, 76) to a source of high pressure fluid, the flexible diaphragm being connected to a spool valve (18) controlling the brake fluid circuit and having an input connected via an input line (14) to a pressure generator (10) and an output connected via an output line (16) to at least one brake (20), said actuator further comprising an electromagnetic actuator (32) adapted to operate said valve means (62, 72, 74), characterised in that said spool valve (18) comprises a spool member (84) displaceable in a bore (82) so that, at its rest position, said input is connected to said output, and out of said rest position, said input is closed, said spool member (84) having sufficient available travel in said bore (82) to provide a disposable volume communicating with said output line (16) sufficient to lower the pressure in same, the movement of said spool member (84) being controlled through said flexible diaphragm (42) in proportion to the electrical signal applied to said electromagnetic actuator (32).

2. Actuator as claimed in claim 1 characterised in that the first and second valve means (62, 72, 74) comprise a common valve member (72) and are sequentially operated by the electromagnetic actuator (32).

3. Actuator as claimed in claim 1 or 2 characterised in that said first valve means (62, 72) further comprises a piston (62) displaceable in response to said electrical signal applied to said electromagnetic actuator (32) for isolating the chambers (38, 40) one from the other, further movement of said piston causing said second valve means (72, 76) to connect the first chamber (38) to said source of high pressure fluid.

4. Actuator as claimed in any preceding claim characterised in that it comprises a one-way check valve (96) arranged to allow passage of fluid from the output (16) to the input (14).

5. Actuator as claimed in any preceding claim in which the low pressure fluid source is a vacuum source, the high pressure fluid source is atmospheric air, and the second fluid is a hydraulic fluid.

6. An anti-skid braking system for a vehicle comprising a bi-fluidic actuator as claimed in any preceding claim, the system further comprising sensing means (22, 26) for determining the speed of rotation of the wheel, electronic processor (28) and actuator means (30) generating said electrical signal applied to said electromagnetic actuator (32) in response to the locking of the vehicle wheel.

## Patentansprüche

1. Bifluidische Bremsbetätigungseinrichtung für einen Fahrzeugbremskreis mit einer geschlossenen Hülle (36), die über eine flexible Membran (42) in eine erste und eine zweite Verstärkungskammer (38, 40) aufgeteilt ist, von denen eine Kammer (40) im Betrieb an ein unter niedrigem Druck stehendes Strömungsmittel anschließbar ist und beide Kammern (38, 40) über einen Kanal (54), der wahlweise durch eine erste Ventileinrichtung (62, 72) geschlossen werden kann, miteinander verbindbar sind, wobei die andere Kammer (38) wahlweise über eine zweite Ventileinrichtung (72, 76) an eine Quelle eines unter hohem Druck stehenden Strömungsmittels anschließbar ist, die flexible Membran mit einem Trommelventil (18) verbunden ist, das den Bremsmittelkreis steuert und einen Eingang besitzt, der über eine Eingangsleitung (14) an einen Druckerzeuger (10) angeschlossen ist, sowie einen Ausgang, der über eine Ausgangsleitung (16) an mindestens eine Bremse (20) angeschlossen ist, und wobei die Betätigungseinrichtung desweiteren eine elektromagnetische Betätigungseinheit (32) aufweist, die die Ventileinrichtung (62, 72, 74) betreiben kann, dadurch gekennzeichnet, daß das Trommelventil (18) ein Trommelelement (84) aufweist, das in einer Bohrung (82) derart verschiebbar ist, daß in seiner Ruheposition der Eingang mit dem Ausgang verbunden ist und außerhalb seiner Ruheposition der Eingang geschlossen ist, daß das Trommelelement (84) einen ausreichenden zur Verfügung stehenden Bewegungsraum in der Bohrung (82) aufweist, um ein zur Verfügung stehendes Volumen vorzusehen, das in ausreichender Weise mit der Ausgangsleitung (16) in Verbindung steht, um den Druck in derselben zu verringern, und daß die Bewegung des Trommelelementes (84) durch die flexible Membran (42) im Verhältnis zu dem an die elektromagnetische Betätigungseinheit (32) angelegten elektrischen Signal gesteuert wird.

2. Betätigungseinrichtung nach Anspruch 1, dadurch gekennzeichnet, daß die erste und zweite Ventileinrichtung (62, 72, 74) ein gemeinsames Ventilelement (72) aufweisen und nacheinander von der elektromagnetischen Betätigungseinheit (32) betätigt werden.

3. Betätigungseinrichtung nach Anspruch 1 oder 2, dadurch gekennzeichnet, daß die erste Ventileinrichtung (62, 72) desweiteren einen Kolben (62) umfaßt, der in Abhängigkeit von dem an die elektromagnetische Betätigungseinheit (32) angelegten elektrischen Signale verschiebbar ist, um die Kammern (38, 40) eine gegenüber der anderen zu isolieren, wobei eine weitere Bewegung des Kolbens bewirkt, daß die zweite Ventileinrichtung (72, 76) die erste Kammer (38) mit der Quelle von unter hohem Druck stehenden Strömungsmittel verbindet.

4. Betätigungseinrichtung nach einem der vorangehenden Ansprüche, dadurch gekennzeichnet, daß sie ein Rückschlagventil (96) aufweist, das einen Durchtritt von Strömungsmittel aus dem Ausgang (16) in den Eingang (14) ermöglicht.

5. Betätigungseinrichtung nach einem der vorangehenden Ansprüche, bei der die Quelle für unter niedrigem Druck stehendes Strömungsmittel eine Unterdruckquelle ist, daß die Quelle für unter hohem Druck stehendes Strömungsmittel atmosphärische Luft ist und das zweite Strömungsmittel ein hydraulisches Strömungsmittel ist.

6. Antiblockierbremssystem für ein Fahrzeug mit einer bifluidischen Betätigungseinrichtung nach einem der vorangehenden Ansprüche, wobei das System desweiteren Abtasteinrichtungen (22, 26) zur Ermittlung der Umdrehungszahl des Rades und elektronische Verarbeitungs- (28) und Betätigungseinrichtungen (30) umfaßt, die das an die elektromagnetische Betätigungseinheit (32) in Abhängigkeit vom Blockieren des Fahrzeugrades angelegte elektrische Signal erzeugen.

## Revendications

1. Dispositif d'actionnement bi-fluidique de frein ou actionneur pour le circuit de freinage d'un véhicule comprenant un carter fermé (36) divisé en une première et seconde chambres (38, 40) de servomoteur, par une membrane souple (42), une chambre (40) étant prévue pour être reliée, lors du fonctionnement, à un liquide à basse pression, les deux chambres (38, 40) pouvant être reliées entre elles par une tubulure (54) qui peut être fermée sélectivement par une première valve (62, 72), l'autre chambre (38) pouvant être reliée sélectivement par une seconde valve (72, 76) à une source de liquide à haute pression, la membrane souple étant reliée à un distributeur à tiroir (18) commandant le circuit de liquide de freinage et ayant une entrée reliée via une tuyauterie d'entrée (14) à un générateur de pression (10) et une sortie reliée via une tyauterie (16) à au moins un frein (20), le dispositif d'actionnement comprenant un actionneur électromagnétique (32) pouvant faire fonctionner la valve (62, 72, 74), caractérisé en ce que le distributeur à tiroir (18) comprend un élément (84) se déplaçant dans un alésage (82) afin qu'en position de repos la dite entrée soit reliée à la dite sortie et en dehors de la position de repos, la dite entrée soit fermée, l'élément mobile (84) ayant une course suffisante dans l'alésage (82) pour fournir un volume disponible communiquant avec la tuyauterie de sortie (16) suffisant pour abaisser la pression dans celle-ci, le déplacement de l'élément (84) étant commandé à travers la membrane souple (42) proportionnelement au signal électrique appliqué à l'actionneur électromagnétique (32).

2. Dispositif d'actionnement ou actionneur selon la revendication 1, caractérisé en ce que les première et seconde valves comprennent un élément commun (72) et sont actionnées de manière séquentielle par l'actionneur électromagnétique (32).

3. Dispositif d'actionnement ou actionneur selon la revendication 1 ou 2, caractérisé en ce que la première valve (62, 72) comprend en outre un piston (62) se déplaçant en réponse au signal électrique appliqué à l'actionneur électromagnétique (32) afin d'isoler les chambres (38, 40) l'une de l'autre, le déplacement supplémentaire du piston faisant en sorte que la seconde valve (72, 76) relie la première chambre (38) à la source de liquide à haute pression.

4. Dispositif d'actionnement ou actionneur selon n'importe laquelle des revendications précédentes, caractérisé en ce qu'il comprend un clapet de retenue unidirectionnel (96) disposé de manière à permettre le passage du liquide de la sortie (16) à l'entrée (14).

5. Dispositif d'actionnement ou actionneur selon n'importe laquelle des revendications précédentes dans lequel la source de liquide à basse pression est une source à dépression, la source de liquide à haute pression étant l'air atmosphérique, et le deuxième fluide est un fluide hydraulique.

6. Système de freinage anti-dérapant pour un véhicule comprenant un actionneur bi-fluidique selon n'importe laquelle des revendications précédentes, comprenant en outre un moyen de captage (22, 26) déterminant la vitesse de rotation de la roue, un processeur électronique (28) et des moyens d'actionnement (30) générant le signal électrique appliqué au dispositif d'actionnement (actionneur) (32) en réponse au blocage de la roue du véhicule.

FIG_1

FIG_2

EP 0 238 388 B1